# EUROPEAN PATENT SPECIFICATION

(11) **EP 2 166 080 B1**
(45) Date of publication and mention of the grant of the patent: **07.05.2014**
(21) Application number: 09155454.3
(22) Date of filing: 18.03.2009
(51) Int. Cl.: A23L 2/78

(54) **Stabilization of liquid food and beverages**
Stabilisierung von Flüssignahrungsmitteln und Getränken
Stabilisation d'alimentation liquide et de boissons

(30) Priority: 23.05.2008 US 128682 P
(43) Date of publication of application: 24.03.2010
(73) Proprietor: Rohm and Haas Company, Philadelphia, PA 19106-2399 (US)
(72) Inventor: Bellamy, Simon, Redhill, Surrey RH1 6DD (GB); Pease, Stephen, North Wales, PA 19454 (US)
(74) Representative: Kent, Venetia Katherine

(56) References cited:
- GB-A- 808 432
- US-A- 2 857 279
- US-A- 3 597 221
- US-A- 3 940 498
- US-A- 4 156 025
- US-A- 4 282 261
- US-A- 6 001 406
- DATABASE WPI Week 198929 Thomson Scientific, London, GB; AN 1989-212564 XP002566162 & SU 1 451 159 A1 (IRKUT ORG CHEM AS SIBE) 15 January 1989 (1989-01-15)
- WARD I L: "The Natura, Formation and prevention of beer hazes" INTERNET CITATION pages 1-4, XP003023528 Retrieved from the Internet: URL:http://www.brewersupplygroup.com/pdf/k nowledge_center/TheNatureBeer_Hazes.pdf> [retrieved on 2008-01-01]

## Description

The present invention relates to liquid food and beverage stabilization, more precisely to a method for stabilization of liquid food and beverages by removing haze-forming substances with ion exchange resin technology.

Haze is a major issue commonly shared between the beverage and liquid food industry. However, depending on the industry, haze is produced in different ways. Within the beer industry, haze is referred to as "cold or chill haze". The haze is defined as cloudiness obtained by proteins becoming unstable at lower temperatures. This haze issue presents a cosmetic problem which negatively reflects on the quality and shelf life of the beer. Conversely, white wine haze is derived from unstable proteins reacting to higher storage temperatures, such temperatures ranging from ambient to higher temps. Like with "cold haze" this creates a cosmetic and shelf life stability issue.

The amount of haze-forming substances and their tendency to form haze depends on several factors. In the case of beer, for instance, each beer is unique in composition depending on the brewery's selection of process variables, quality of hop and barley etc. This means that an acceptable level of stability/stabilization as measured by commonly accepted tests may vary between types of beer and/or brewery thus fixed limits for stabilization are therefore difficult to set.

Attempts to remediate the problems associated with haze in liquid food and beverages, thereby stabilizing the samples, exist in the art. One such attempt is disclosed in U.S. 6,001,406, a patent that discloses a method for stabilization of beverages by removing polyphenols and protein substances using polymeric materials. Although US 6,001,406 discloses a method to stabilize liquid food and/or beverages, it creates another problem of color loss by removing polyphenols from the sample. Just as removing haze efficiently is a problem for many liquid food and beverages, color loss is a problem as well. Preserving the color of beverages is a desirable property for many beverage manufacturers in particular. Oftentimes, a manufacturer will not employ a process for removing haze or sample stabilization if it is uncertain to what extent color will be removed from the sample. Thus a need still exists for a process that will stabilize liquid food and beverages by removing haze forming compounds while minimizing color loss.

Other attempts to remove haze forming proteins from beverages, wine in particular were through the use of proteolytic enzymes or bentonite. Bentonite is a fine clay powder which is used once and then filtered out. The use of bentonite requires wine makers to also use diatomaceous earth (DE) filters to remove it. Although with bentonite and DE color loss can be minimized, the use of bentonite and DE result in a variety of other problems for the wine makers. Such problems include: a negative taste to the wine, degradation in the quality of the wine, and inefficiency in the process by using bentonite because it is time consuming. The bentonite process may take several weeks for settling. Oftentimes, large inventories are tied up in tankage and plant throughput is thus limited. Furthermore, the disposal of bentonite and DE is expensive and poses environmental issues and the use of DE causes yield loss. Moreover, bentonite prevents the use certain filtration techniques such as final polishing ultra filtration which is preferred for filtering residual turbidity. Bentonite also can damage the ultra-filtration membrane and is not as effective as the ultra filtration technique.

The present invention solves the problems in the art by providing an efficient process that uses functionalized ion exchange resins to remove haze forming compounds while minimizing color loss. The process also enables the use of ultra filtration which produces a lower turbidity, or haze containing product than bentonite and DE alone.

As used herein by "stabilization" is meant the removal of potentially haze-forming substances in order to render haze formation more difficult.

As used herein by "liquid food and/or beverage" is meant any product capable of safe, non-toxic ingestion by any living species that in natural state is a liquid at room temperature. Examples of liquid food and or beverages of the present invention include, but are not limited to, wine, beer, fruit juices, and syrups.

As used herein haze is measured using the accelerated heat haze test method (NTU units). "Low haze" unstabilized wine is defined as wines having an accelerated heat haze value of less than 25 NTU. "High haze" unstabilized wine is defined as wines having an accelerated heat haze value of greater than ore equal to 25 NTU.

According to the present invention there is provided a method for stabilizing liquid foods and beverages as in claim 1.

Ion exchange resins for removing haze forming compounds of the present invention are sulfonated polymers of styrenes including styrene-divinyl benzene copolymers.

Ion exchange resins of the present invention have an average pore diameter of between 60 and 300 Angstroms; and alternatively, between 100 and 200 Angstroms. The ion exchange resins have a surface area of the dry resins, as measured by Micromeritics Surface Area and Porosity Analyzer, model Tristar 3000 using Nitrogen, ranging from 250 to 900 m²/g; and alternatively from 250 to 450 m²/ g. Resins of the present invention also have a pore volume ranging from 0.9 to 1.4 ml/g. The resin of the present invention performs unexpectedly well alone but may also be used in combination with other conventional protein removal techniques.

The porosity of the ion exchange resin is sufficiently high to allow for penetration of the liquid food or beverage haze forming proteins. Accordingly the ion exchange resin should be permeable to haze forming proteins.

The ion exchanging groups may be cation exchanging or anion exchanging. Examples of cation exchanging groups are carboxy (--COOsulphonic acid (--SO₂O⁻), phosphonic acid groups etc. Examples of anion exchanging groups are quarternary, tertiary, secondary and primary amino groups (--N⁺(R₁,R₂,R₃)). The free valence indicates a covalent link to the matrix and is typically through an organic spacer structure, for instance pure alkylene or hydroxy alkylene. R₁₋₃ is typically hydrogen or lower alkyl (C₁₋₆) that may be substituted with one or more hydroxy groups.

The method of the present invention comprises contacting the liquid food or beverage with at least one ion exchange resin to remove haze forming proteins thereby effectuating stabilization. This contact may occur in form known to one of ordinary skill of the art. Non-limiting examples include contact within a column or mixed tank. Furthermore the method may be run continuously or in a batch fashion. Single or multiple ion exchange resins stages may be used according to the present invention.

Additionally, the ion exchange resin may be regenerated by contacting it with a solution for regeneration. Suitable solutions include basic solutions. Such basic solutions include but are not limited to potassium hydroxide, and sodium hydroxide. The regeneration may be carried out by allowing the beverage to pass through a vessel (e.g. a column) containing the ion exchange resin in any of the above-mentioned forms. The process may be continuous or in a batch-wise form.

Although an object of the present invention is to remove haze forming protein compounds, it is also an object of the present invention to minimize color loss. This goal is accomplished by minimizing the removal of color producing compounds within the liquid food or beverage. Such color producing compounds include but are not limited to polyphenolics. For example for low haze unstabilized wines, an acceptable ratio of percentage of color loss ranges from 0 to 10% with 0% color loss being ideal.

The process of the present invention may be used alone or in combination with other protein removal techniques.

### MATERIALS and TEST METHODS

### Resins

Amberlite™ FPX62 ion exchange resin (Resin 1) and Amberlite™ FPX66 adsorbent resin (Comp. 2), available from Rohm and Haas Company, and Purolite™ MN 500 (Comp. 1), commercially available from Purolite International were used in the following examples.

### Wine and Beer

Unstabilized Gewurztraminer Wine was obtained from Filsinger Winery of California. Unstabilized Chardonnay wine was made from refrigerated California grape juice purchased from Keystone Homebrew of Montgomeryville, Pennsylvania. Unstabalized beer was made from a brew kit obtained from Keystone Homebrew and supplied to Keystone by Coopers Company of Adelaide Australia Finished stabilized wine and beer products were purchased from local stores.

### Pre-Filtering beer and wine

Beer and wines are typically filtered to produce clear liquids for consumers, however the beers and wines for testing in this work, were not finished products and had not been filtered. Therefore turbidity was removed from the wine and beer samples by pumping ambient temperature wines and beers through 0.45 micron polytetrafluoroethylene (PTFE) cartridges Acrodisc™ filters available from Pall Corporation. This step does not remove the wine shelf or beer chill haze potential, it allows the haze potential to be distinguished from residual turbidity.

### Resin Preconditioning

Resins were preconditioned by extensive washing with 100% Ethanol to remove potential taste components that could leach out of the resin and be detectable in wine. Ethanol was then washed out with deionized water. Resins in some cases were also pretreated by the use of dilute Potassium Hydroxide followed by de-ionized water rinsing.

### Shake Tests - Wine

Various weights of Amberlite™ FPX62 ion exchange resin (Resin 1) and Purolite™ MN 500 (Comp. 1) and Amberlite™ FPX66 (Comp. 2) were measured on an Ohaus™ GT 4800 scale and added to 112 ml glass bottles as expressed in the tables of Example 2. Resin 1 and Comp 1 were used in either acid (H) or Potassium (K) form. Comp. 2 is an adsorbent resin based on divinyl benzene; it does not have an ionic form. The bottles were filled with pre-filtered wine. Next, the bottles were shaken overnight on a shaker supplied by Eberbach Corporation of Ann Arbor, MI. The next day the samples rested, allowing the resins to settle. The supernatant wine was poured off. NTU turbidity was measured. In some cases the wine was filtered through 0.45 micron syringe filters attached to filter discs to prevent turbidity generated from the shake tests from interfering with the subsequent accelerated heat haze test. The pH was measured with an Oakton™ pH meter, 100 series and Oakton™ probe. The pH apparatus was calibrated with Fisher-Scientific brand pH 4 and 7 buffer solutions. During a second round of shake testing the resin used was in acid form. Acid form resin lowered the pH of the wine. The separated wine was returned to its original feed pH by adding 2% Potassium Hydroxide dropwise, before heat haze development tests were conducted.

### Shake Tests Beer

The beer shake tests were repeated using the same procedure, except that the shake time was three hours. Additionally the resins used were in Potassium form only.

### Accelerated Haze Development Method for Wine

Wine samples measuring 28 grams in glass vials were heated was to 85°C and in a water bath supplied by Precision scientific (280 series). The temperature was maintained for five hours. The wine was then quickly cooled to ambient temperature under flowing tap water. After one hour at ambient temperature Nephelometric Turbidity Units (NTU) were measured with a turbidity meter supplied by HF scientific inc, model Micro 100 NTU. NTU standards 0.01,10 and 1000 NTU were supplied with the equipment and were used for calibration.

### Accelerated Haze Development Method for Beer

Filtered beer was put in full glass 28 ml vials, the vials were placed in an oven that was held at 50 centigrade oven. After 72 hours the samples were removed from the oven and placed in a refrigerator at 4 centigrade. The following day NTU measurements were then made on the cold beer.

### Wine Column Tests

Resin 1 was placed in a 15 mm glass jacketed column supplied by Ace Glass, NJ. End fittings were Teflon. These end fittings contain 60 mesh polypropylene screens to hold the resin in place while the wine and other fluids pass through. A Rabbit peristaltic pump manufactured by Rainin™ Instrument Company was used to provide fluid flow. The column jacket was connected to a heater and chiller water batch to allow for thermostated temperature control (heating) for resin regeneration. The resin bed size used was eight mls. The wine flow rate was typically 0.4 ml/min which is equivalent to 3 bed volumes per hour. Several tests were run with Filsinger and Keystone wines. The test duration was up to a week with continuous operation. Feed and product wine vessels were kept iced and nitrogen blanketed to exclude air.

### Color

Minimization of color loss is an important parameter. Absorbance measurements were made with a spectrophotometer, model Spectronic Genisys 2 equipped with a one centimeter cell.

### Protein measurement

The Bradford method was used. Analytical supplies were purchased from Bio-Rad Company. The results are provided by mg/l protein relative to Bovine Serum Albumin BSA protein standard.

### EXAMPLES

### Example 1: Evaluate accelerated haze test potential for commercial stabilized wines and assess accelerated haze content of available unstabalized wines

### Commercial wines

Two haze stabilized wines were bought from a local liquor store in order to asses their accelerated haze potential to establish a reference target. The two store purchased wines were Gewurztraminer Fetzer 05 Valley Oaks Ca and Gewurztraminer Chateau Stu Michelle Wa 05.

| Wine | Accelerated heat haze test NTU |
|---|---|
| Fetzer 05 Valley Oaks, Ca | 1.34 |
| Chateau Stu Michelle, Wa | 2.3 |

### Unstabilized High Haze Wine Samples

| Wine | Accelerated heat haze test NTU |
|---|---|
| Filsinger Unstabalized | 72.6 |
| Keystone Unstabalized | 56 |

The unstabilized Filsinger and Keystone wines have high accelerated haze values versus commercial products and were chosen for resin testing. As demonstrated by the commercial wines, a reasonable maximum target for product NTU accelerated haze potential is approximately 2.5 NTU units.

### Example 2: Shake Test Results Wine

**First Round**

| Resin | Resin Form | Wine | Mls wine/gram resin | Accelerated Heat Haze NTU | pH | Color loss 421 nm % | Color loss 520 nm % |
|---|---|---|---|---|---|---|---|
| | | Filsinger | | 80.7 | 3.29 | | |
| Resin 1 | H | Filsinger | 64 | 0.55 | 2.9 | 17.9 | 31.2 |
| Resin 1 | H | Filsinger | 132 | 9.68 | 3.1 | 7.1 | 13 |
| Resin 1 | H | Filsinger | 302 | 38.2 | 3.21 | 3.8 | 7.8 |
| Resin 1 | K | Filsinger | 69 | 6.88 | 3.41 | 11.5 | 20.8 |
| Resin 1 | K | Filsinger | 146 | 24 | 3.35 | 4.5 | 10.4 |
| Resin 1 | K | Filsinger | 318 | 41.6 | 3.35 | 0 | 0 |
| Comp. 2 | None | Filsinger | 250 | | 3.35 | 38 | 37.5 |

Haze potential is reduced by Resin 1 ion exchange resin in both acid and potassium form. Some color removal measured occurred with Resin 1, when the wine to resin ratio was increased to 318 the wine color removal was not distinguishable from the untreated wine. Comp. 2 is an example of a hydrophobic non functionalized adsorbent, it removed very large amounts of color and is not suitable for this application.

**Second Round Shake Tests. Treated wine pH is adjusted back to original pH.**

| Resin | Resin Form | Wine | Mls wine/gram resin. Ratio | Accelerated Heat Haze NTU | pH | Color loss 421 nm % | Color loss 520 nm % | Mg/l Protein |
|---|---|---|---|---|---|---|---|---|
| Untreated | | Filsinger | | 80.7 | 3.02 | | | 13.6 |
| Resin 1 | H | Filsinger | 30 | 0.43 | 2.33 | 32.4 | 62 | 4.2 |
| Resin 1 | H | Filsinger | 50 | 0.5 | 2.55 | 18 | 33 | 5.0 |
| Resin 1 | H | Filsinger | 70 | 0.36 | 2.7 | 14.4 | 26 | 4.7 |
| Resin 1 | H | Filsinger | 100 | 0.44 | 2.77 | 9.9 | 21 | 5.5 |
| Resin 1 | H | Filsinger | 250 | 8.92 | 2.94 | 4.5 | 7.7 | 8.8 |
| Untreated | | Keystone | | 61.2 | 3.66 | | | 24.2 |
| Resin 1 | H | Keystone | 30 | 0.28 | 2.88 | 24.8 | 30 | 4.4 |
| Resin 1 | H | Keystone | 50 | 0.28 | 3.18 | 16.1 | 20 | 5.3 |
| Resin 1 | H | Keystone | 70 | 0.46 | 3.28 | 13 | 18 | 6.1 |
| Resin 1 | H | Keystone | 100 | 4.82 | 3.37 | 9.3 | 13 | 6.9 |
| Resin 1 | H | Keystone | 250 | 22.4 | 3.51 | 5 | 7.5 | 14.2 |
| Comp. 1 | H | Filsinger | 30 | 1.19 | 2.59 | 42.3 | 56 | 4.7 |
| Comp. 1 | H | Filsinger | 50 | 2.68 | 2.75 | 27.9 | 41 | 5.8 |
| Comp. 1 | H | Filsinger | 70 | 7.03 | 2.83 | 21.6 | 33 | 7.1 |
| Comp. 1 | H | Filsinger | 100 | 9.35 | 2.89 | 16.2 | 26 | 8.0 |
| Comp. 1 | H | Filsinger | 250 | 19.2 | 2.96 | 7.2 | 10 | 10.4 |

Both high haze wines were reduced to <2.5 NTU using Resin 1 in acid H form. Resin 1 removed haze from Filsinger wine more effectively than does resin Comp. 1.

### Example 3: Column Test results - Wine

### Test 1 Filsinger Gewurztraminer wine, resin in Potassium K form,

Unstabilized Filsinger wine, the feed wine, was passed through Resin 1 in potassium form. 148 bed volumes (BV) were collected (Sample 1). Next, 85 BV more were collected (Sample 2). Finally, a composite was made of both samples. Accelerated Heat haze (NTU), Color loss and Mg/l Protein results are shown below:

| Bed Volumes | Accelerated Heat Haze NTU | pH | Color loss 421 nm % | Color loss 499 nm % | Mg/l Protein Bradford |
|---|---|---|---|---|---|
| Feed Wine | 66.7 | 3.3 | | | 22.2 |
| 148 (1) | 16 | 3.4 | 6.0 | 23.2 | 6.4 |
| 148-233 (2) | 30.8 | 3.3 | 3.0 | 3.6 | 12.4 |
| Composite | 23 | 3.3 | 4.5 | 12.5 | 10.2 |

### Test 2 Filsinger Gewurztraniner wine, resin in acid H form,

Unstabilized Filsinger wine, the feed wine, was passed through Resin 1 hydrogen form, 27 bed volumes (BV) were collected (Sample 1). Next, 36 BV more were collected (Sample 2). Heat haze (NTU), color loss and Mg/l Protein results are shown below:

| Bed Volumes | Accelerated Heat Haze NTU | pH | Color loss 421 nm % | Color loss 499 nm % | Mg/l Protein Bradford method versus BSA standard |
|---|---|---|---|---|---|
| Feed Wine | 80.7 | 3.31 | | | 24.2 |
| 27 (1) | 0.89 | 2.55 | 34 | 47 | 4.1 |
| 27-63 (2) | 7.8 | 3.39 | 13 | 22 | 8.1 |

Example 3, test 1 shows that accelerated heat haze is reduced, however it is not reduced to the targets of example 1. Example 3 test 2 was more effective at reducing accelerated heat haze and protein. This can be attributed to the resin being in acid form.

### Example 4 Column Test Wine

Unstabilized Chardonnay wine was made from Keystone grape juice which they obtained from a California source. The wine was passed through Resin 1, Potassium form, 443 total bed volumes were passed. A total of ten samples were collected for analysis. Accelerated Heat haze (NTU), color loss and Mg/l Protein results are shown below:

| Bed | Accelerated Heat | mg/l Protein | Color | Color |
|---|---|---|---|---|
| Volumes | Haze | Bradford | % loss | % loss |
| Chardonnay | NTU | | 421 nm | 499 nm |
| | | | | |
| 44 | 0.55 | 8.3 | 17.0 | 23.7 |
| 89 | 0.66 | 9.9 | 6.6 | 10.5 |
| 135 | 1.03 | 10.5 | 4.7 | 7.9 |
| 177 | 0.73 | 11.0 | 3.8 | 5.3 |
| 226 | 1.00 | 12.1 | 2.8 | 2.6 |
| 266 | 1.65 | 12.4 | 2.8 | 2.6 |
| 327 | 1.54 | 11.8 | | |
| 363 | 1.69 | 12.4 | 1.9 | 2.6 |
| 406 | 1.63 | 12.4 | | |
| 443 | 1.92 | 12.7 | 1.9 | 0.0 |
| Feed | 3.3 | 20.4 | | |

There is effective removal of accelerated haze potential and with low color loss (less than 10% at 421nm).

### Example 6

A commercial lager style beer, Coors™ light and also unstabalized homemade beer were filtered and then tested by the accelerated chill haze beer method. The unstabalized beer had accelerated chill haze potential of 22.4. The commercial stabilized product had an accelerated haze value of 4.4.

### Example 7

Shake tests were performed with filtered unstabalized homemade beer with Resin 1 and Comp 1. 112 mls of the beer were shaken for 3 hours with different weights of Resin 1 Potassium K form as shown in the table. The resin treated beer samples were subjected to the accelerated haze development chill haze procedure.

| Results of accelerated haze test | Resin form | Mls beer per gram resin | Accelerated Chill Haze NTU |
|---|---|---|---|
| Shake test Resin 1 | K | 45 | 1.5 |
| Shake test Resin 1 | K | 139 | 9.7 |
| Comp 1 | K | 45 | 11.8 |

Resin 1 effectively lowered the accelerated chill haze to 1.5. Comp 1 resin was less effective.

## Claims

1. A method for stabilizing liquid foods and beverages comprising:
providing at least one liquid food or beverage wherein the liquid food or beverage contains haze-forming proteins; and
removing at least a portion of the haze-forming proteins by contacting the liquid food or beverages with a functionalized ion exchange resin wherein the functionalized ion exchange resin has an average pore diameter of between 60 Angstroms to 300 Angstroms; a surface area of the dry resins from 250 m²/ g to 900 m²/ g; and a pore volume ranging from 0.9 ml/g to 1.4 ml/g,
wherein said resin consists of a sulfonated polymer of styrenes.

2. The method of claim 1 wherein the liquid food or beverage is beer.

3. The method of claim 1 wherein the liquid food or beverage is fruit juice.

4. The method of claim 1 wherein the liquid food or beverage is wine.

5. The method of claim 1 wherein the functionalized ion exchange resin is not used in combination with another protein removal technique.

## Patentansprüche

1. Ein Verfahren zur Stabilisierung von Flüssignahrungsmitteln und Getränken, das Folgendes beinhaltet:
Bereitstellen von mindestens einem Flüssignahrungsmittel oder Getränk, wobei das Flüssignahrungsmittel oder Getränk Trübung bildende Proteine enthält; und
Entfernen mindestens eines Teils der Trübung bildenden Proteine durch das In-Kontakt-Bringen des Flüssignahrungsmittels oder der Getränke mit einem funktionalisierten Ionenaustauschharz, wobei das funktionalisierte Ionenaustauschharz einen durchschnittlichen Porendurchmesser von zwischen 60 Ängström bis 300 Ängström; einen Oberflächenbereich der Trockenharze von 250 m²/g bis 900 m²/g; und ein Porenvolumen im Bereich von 0,9 ml/g bis 1,4 ml/g aufweist,
wobei das Harz aus einem sulfonierten Polymer von Styrenen besteht.

2. Verfahren gemäß Anspruch 1, wobei das Flüssignahrungsmittel oder Getränk Bier ist.

3. Verfahren gemäß Anspruch 1, wobei das Flüssignahrungsmittel oder Getränk Fruchtsaft ist.

4. Verfahren gemäß Anspruch 1, wobei das Flüssignahrungsmittel oder Getränk Wein ist.

5. Verfahren gemäß Anspruch 1, wobei das funktionalisierte Ionenaustauschharz nicht zusammen mit einer anderen Technik zur Proteinentfernung verwendet wird.

## Revendications

1. Une méthode pour stabiliser des aliments liquides et des boissons comprenant :
fournir au moins un aliment liquide ou une boisson, l'aliment liquide ou la boisson contenant des protéines formant un trouble ; et
retirer au moins une partie des protéines formant un trouble en mettant en contact l'aliment liquide ou les boissons avec une résine échangeuse d'ions fonctionnalisée, la résine échangeuse d'ions fonctionnalisée ayant un diamètre de pores moyen compris entre 60 Angströms et 300 Angströms ; une superficie des résines sèches allant de 250 m²/g à 900 m²/g ; et un volume de pore compris dans la gamme allant de 0,9 ml/g à 1,4 ml/g,
dans laquelle ladite résine consiste en un polymère sulfoné de styrènes.

2. La méthode de la revendication 1 dans laquelle l'aliment liquide ou la boisson est de la bière.

3. La méthode de la revendication 1 dans laquelle l'aliment liquide ou la boisson est du jus de fruit.

4. La méthode de la revendication 1 dans laquelle l'aliment liquide ou la boisson est du vin.

5. La méthode de la revendication 1 dans laquelle la résine échangeuse d'ions fonctionnalisée n'est pas utilisée en combinaison avec une autre technique de retrait de protéines.
